# EUROPÄISCHE PATENTSCHRIFT

(11) **EP 2 585 413 B1**
(45) Veröffentlichungstag und Bekanntmachung des Hinweises auf die Patenterteilung: **20.01.2016**
(21) Anmeldenummer: 11743329.2
(22) Anmeldetag: 22.06.2011
(51) Int. Cl.: F26B 1/00, F26B 11/04, F26B 21/04, C04B 111/00, C04B 7/44, C04B 7/36

(54) **VERFAHREN ZUM VERWERTEN VON ORGANISCHEN ABFALLSTOFFEN**
PROCESS FOR UTILIZING ORGANIC WASTE MATERIALS
PROCÉDÉ DE VALORISATION DE DÉCHETS ORGANIQUES

(30) Priorität: 22.06.2010 AT 10362010
(43) Veröffentlichungstag der Anmeldung: 01.05.2013
(73) Patentinhaber: Holcim Technology Ltd., 8645 Rapperswil-Jona (CH)
(72) Erfinder: STOFFEL, Beat, CH-8126 Zumikon (CH); CRUZ, Armando, Veracruz (MX)
(74) Vertreter: Keschmann, Marc
(86) Internationale Anmeldenummer: PCT/IB2011/001418
(87) Internationale Veröffentlichungsnummer: WO 2011/161525

(56) Entgegenhaltungen:
- US-A1- 2005 274 067
- US-A1- 2009 293 303

## Beschreibung

Die Erfindung betrifft ein Verfahren zum Verwerten von organischen Abfallstoffen, insbesondere von cellulosehältigen, feuchten, organischen Abfallstoffen in einem Klinkerherstellungsverfahren, bei welchem die Abfallstoffe als Brennstoff in das Klinkerherstellungsverfahren eingebracht und verbrannt werden.

Die US 2009/293303 A1 offenbart ein Verfahren zum Verwerten von organischen Abfallstoffen in einem Klinkerherstellungsverfahren, wobei die Abfallstoffe als Brennstoff in das Klinkerherstellungsverfahren eingebracht und verbrannt werden und vor dem Einbringen in einem Trocknungsschritt, der in einem Trocknungsreaktor durchgeführt wird, getrocknet werden.

Die US 2005/274067 A1 beschreibt ein Verfahren zur Trocknung organischer Abfallstoffe mittels Nutzung der Abwärme aus einem Klinkerkühler.

Bei der Zementklinkerherstellung wird Zementrohmehl vorgewärmt und kalziniert, wobei CO₂ entweicht. Jedoch erfolgt das eigentliche Brennen in einem Drehrohrofen, woraufhin durch Kühlung des gebrannten Klinkers ein hydraulisches Produkt entsteht. Insgesamt werden für diese Prozesse erhebliche Energiemengen aufgewendet, und es wird beständig versucht, die aufgewendete Energie möglichst zurück zu gewinnen und für den Prozess bestmöglich wieder zu verwenden. Darüber hinaus besteht das Bestreben, für den Zementklinkerherstellungsprozess alternative Brennstoffe zu verwenden, d.h. Brennstoffe mit einem im Vergleich zu hochwertigem Erdgas oder Erdöl verringerten Brennwert, wobei solche alternativen Brennstoffe häufig in Form von Abfällen zur Verfügung stehen. Neben organischen Abfallstoffen, wie beispielsweise Altreifen und mit Erdöl verunreinigten Erden und ähnlichen Stoffen, die zur Verwendung in Klinkerherstellungsverfahren zerkleinert und häufig auch verschwelt bzw. vergast werden müssen, um den Energieinhalt in Form von Synthesegas in einem Klinkerherstellungsverfahren verwenden zu können, erscheinen auch cellulosehältige Abfallstoffe als aussichtsreich, um den Bedarf an Primärbrennstoff in Zementindustrie zu senken. Bei der Papierherstellung und in der Kaffee- und Zuckerindustrie fallen erhebliche Mengen an Pulpe an, wobei die Pulpe neben ihrem Gehalt an brennbarer Cellulose in aller Regel erhebliche Mengen an Wasser beinhaltet. Weitere derartige cellulosehältige, feuchte, organische Abfallstoffe sind Abfälle aus der Landwirtschaft wie zum Beispiel Reisschalen, Palmkernöl- und Sojabohnenrückstände sowie Holz- und Rapsabfälle.

Bisher wurden derartige cellulosehältige Abfallstoffe zum Teil in Biogasanlagen vergärt, wobei jedoch der Großteil deponiert werden muss. Derartige Deponien haben jedoch neben ihrem erheblichen Platzbedarf den Nachteil, dass Grundwasserprobleme und unangenehme Gerüche das Auffinden neuer Deponiemöglichkeiten zunehmend schwierig machen.

Aufgrund des erheblichen Verwertungspotentials der Zementindustrie für derartige cellulosehältige Abfallstoffe haben sich in manchen Regionen Betriebe, die derartige Abfallstoffe produzieren, in der Nähe von Zementproduktionsstätten angesiedelt, um einen günstigen Entsorgungsweg für die cellulosehältigen Abfallstoffe nützen zu können.

Bisher war das Verwertungspotential in der Zementindustrie für derartige Abfallstoffe allerdings aufgrund des erheblichen Feuchtigkeitsgehalts limitiert, da die Abfallstoffe direkt in die Brenneranlagen eingebracht wurden, was aufgrund des Wassergehaltes zu einem erhöhten Wärmebedarf im Klinkerherstellungsverfahren zur Verdampfung des Wassers geführt hat. Darüber hinaus resultiert aus den erheblichen eingebrachten Wassermengen nach der Verdampfung des Wassers ein ungünstig hohes Volumen von Gesamtprozessabgasen, was wiederum zu einem erhöhten Aufwand beim Abgasmanagement führte. Andererseits werden gerade die genannten cellulosehältigen Abfallstoffe als für die Zementindustrie günstiger alternativer Brennstoff angesehen, da die genannten Stoffe aufgrund ihres geringen Gehalts an Chlor und Schwefel relativ günstig für den Gesamtprozess wären.

Der vorliegenden Erfindung liegt daher die Aufgabe zugrunde, ein Verfahren der eingangs genannten Art dahingehend zu verbessern, dass der Wassergehalt der cellulosehältigen, feuchten, organischen Abfallstoffe gesenkt wird, um die genannten Nachteile, die mit einem hohen Wassergehalt einhergehen, zu vermeiden. Gleichzeitig soll das Wärmepotential der genannten Abfallstoffe möglichst vollständig genützt werden und die Notwendigkeit des Deponierens weitgehend vermieden werden.

Zur Lösung dieser Aufgabe ist ein Verfahren der eingangs genannten Art erfindungsgemäß dahingehend weitergebildet, dass die Abfallstoffe vor dem Einbringen in das Klinkerherstellungsverfahren in einem Trocknungsschritt im Gleichstrom mit den heißen Abgasen des Klinkerherstellungsverfahrens in Kontakt gebracht und getrocknet werden, und dass der Trocknungsschritt in einem Trocknungsreaktor durchgeführt wird, in welchem die feuchten Abfallstoffe zusammen mit den heißen Abgasen unter mehrmaligem Umlenken der Strömungsrichtung um 180° durch eine Reihe von konzentrisch angeordneten Rohren geleitet werden, und die Temperatur der heißen Abgase vor dem Trocknungsschritt durch Zumischen von Umgebungsluft und/oder von Luft aus dem Klinkerherstellungsverfahren auf einen Maximalwert von 400°C eingestellt wird. Bei dem erfindungsgemäßen Verfahren werden somit die großen Wärmemengen, die in den heißen Abgasen des Klinkerherstellungsverfahrens enthalten sind, zur Trocknung der feuchten, cellulosehältigen Abfallstoffe herangezogen, wobei die heißen Abgase erfindungsgemäß im Gleichstrom mit den feuchten Abfallstoffen in einen Trocknungsschritt geführt werden. Durch das Führen der feuchten Abfallstoffe im Gleichstrom mit den heißen Abgasen des Klinkerherstellungsverfahrens erfolgt während des Trocknens eine Abkühlung der Abgase, sodass vermieden werden kann, dass bereits relativ stark getrocknete Cellulosefraktionen hohen Temperaturen ausgesetzt werden, wodurch die Bildung von volatilen organischen Verbindungen (VOC) oder Gerüchen im Abgas durch Überhitzen der organischen Substanzen vermieden wird.

Aufgrund des im Normalfall sehr hohen Wassergehaltes der feuchten, cellulosehältigen Abfallstoffe muss der Trocknungsschritt unter Verwendung der heißen Abgase des Klinkerherstellungsverfahrens über eine vergleichsweise lange Dauer durchgeführt werden. Der Trocknungsschritt wird daher in einem Trocknungsreaktor durchgeführt, in welchem die feuchten Abfallstoffe zusammen mit den heißen Abgasen unter mehrmaligem Umlenken der Strömungsrichtung um 180° durch eine Reihe von konzentrisch angeordneten Rohren geleitet werden. Bei Verwendung eines solchen Trocknungsreaktors kann eine relativ lange Verweildauer in einem relativ kompakt aufgebauten Trocknungsreaktor realisiert werden, wobei durch das Umlenken des Materialstroms, welches um die Kanten der konzentrisch angeordneten Rohre erfolgt, eine zusätzliche Durchmischung der zu trocknenden Abfallstoffe mit den heißen Abgasen und eine Zerkleinerung erfolgt. Zusätzlich kann der Reaktor rotierend betrieben werden, wobei auch Einbauten zur Durchmischung und Zerkleinerung des Materialstroms denkbar sind. Klinkerherstellungsverfahren sind ausgesprochen energieaufwendig, sodass derartige Verfahren großen Mengen von heißen Abgasen produzieren. In bevorzugter Weise ist das erfindungsgemäße Verfahren jedoch dahingehend weitergebildet, dass als heiße Abgase die Abgase des Klinkerkühlers und/oder des Vorwärmers verwendet werden, an welchen Stellen die heißen Abgase besonders einfach entnommen werden können.

Um ein ausreichend großes Verhältnis von Oberfläche zu Volumen der festen Anteile der feuchten, cellulosehältigen Abfallstoffe zu gewährleisten, ist das erfindungsgemäße Verfahren gemäß einer bevorzugten Ausführungsform dahingehend weitergebildet, dass die Abfallstoffe vor dem Trocknungsschritt zerkleinert werden.

Wie bereits erwähnt, kann durch das erfindungsgemäße Verfahren, bei welchem die zu trocknenden cellulosehältigen Abfallstoffe und die heißen Abgase im Gleichstrom geführt werden, die Bildung von volatilen organischen Substanzen und störenden Geruchsstoffen weitgehend hintangehalten werden. Um dies weiter sicherzustellen, wird das Verfahren gemäß der vorliegenden Erfindung so durchgeführt, dass die Temperatur der heißen Abgase vor dem Trocknungsschritt durch Zumischen von Umgebungsluft und/oder von Luft aus dem Klinkerherstellungsverfahren auf einen Maximalwert von 400°C eingestellt wird, sodass eine Überhitzung der organischen Abfallstoffe sicher vermieden werden kann.

Demselben Zweck dient die bevorzugte Maßnahme, dass die Temperatur der heißen Abgase am Ende des Trocknungsschrittes durch Steuerung des Stromes durch den Trocknungsreaktor auf einen Maximalwert von 150°C eingestellt wird, wobei die erheblich niedrigere Temperatur am Ende des Trocknungsschrittes deshalb erforderlich ist, da die getrockneten cellulosehältigen Abfallstoffe bei weitem anfälliger gegenüber thermischen Zersetzungsreaktionen sind als die Abfallfallstoffe im feuchten Zustand, wie sie vor dem Trocknungsschritt vorliegen. Zum Einstellen des Maximalwerts der Abgase am Ende des Trocknungsschrittes kann eine entsprechende Steuerung des Stromes der Stoffe durch den Trocknungsreaktor herangezogen werden, womit die Verweilzeit und/oder das Verhältnis von Gasstrom zu Materialstrom, d.h. des Stromes der Abfallstoffe und somit die Abkühlung der Abgase im Trocknungsreaktor gesteuert werden kann.

Gemäß einer bevorzugten Ausführungsform der vorliegenden Erfindung kann das Verfahren so durchgeführt werden, dass das aus dem Trocknungsreaktor austretende Gemisch aus Gas und getrockneten Abfallstoffen aufgetrennt wird, wodurch die zur Trocknung herangezogenen heißen Abgase des Klinkerherstellungsverfahrens einer weiter unten behandelten Abgasaufbereitung zugeführt und die getrockneten Abfallstoffe vor ihrer weitergehenden Verwertung und insbesondere vor ihrer Verbrennung im Klinkerherstellungsverfahren gelagert bzw. in einfacher Weise transportiert werden können.

Wie bereits erwähnt, ist es im Normalfall notwendig, die heißen Abgase nach dem Trocknungsschritt einer Abgasaufbereitung zuzuführen. Bevorzugt ist das Verfahren in diesem Zusammenhang dahingehend weitergebildet, dass zumindest ein Teil der Gase aus dem Trocknungsreaktor einer Entstaubung zugeführt wird. Alternativ kann das erfindungsgemäße Verfahren in diesem Zusammenhang jedoch auch dahingehend weitergebildet sein, dass zumindest ein Teil der Gase aus dem Trocknungsreaktor dem Klinkerherstellungsverfahren als Verbrennungsluft zugeführt wird. In beiden Fällen wird das Austreten von möglicherweise bei der Trocknung entstehenden unangenehmen Gerüchen oder Feinstaub in die Atmosphäre verhindert.

Eine weitere mögliche günstige Weiterverwendung der aus dem Trocknungsreaktor austretenden Gase wird gemäß einer bevorzugten Ausführungsform der vorliegenden Erfindung dadurch erreicht, dass zumindest ein Teil der aus dem Trocknungsreaktor austretenden Gase in den Trocknungsreaktor rezirkuliert werden, wobei dann, wenn der Anteil der in den Trocknungsreaktor rezirkulierten Gase entsprechend gewählt wird, die bereits beschriebene Einstellung des Maximalwertes der Temperatur der Abgase vor dem Trocknungsschritt erreicht werden kann.

Für den Fall, dass die Abgase als Verbrennungsluft in das Klinkerherstellungsverfahren eingebracht werden sollen, kann das erfindungsgemäße Verfahren bevorzugt dahingehend weitergebildet sein, dass die aus dem Trocknungsreaktor ausgetragenen Gase zur Trocknung einem Kondensator zugeführt werden.

Um die getrockneten alternativen Brennstoffe effektiv und kontrollierbar in einem Klinkerherstellungsverfahren einsetzen zu können, muss ein gleichmäßiger Abbrand und somit eine gleichmäßige und einschätzbare Wärmeabgabe sichergestellt werden. Gemäß einer bevorzugten Ausführungsform der vorliegenden Erfindung ist das Verfahren daher dahingehend weitergebildet, dass die getrockneten Abfallstoffe einer Zerkleinerung unterworfen werden. Auf diese Weise ist sichergestellt, dass die Abfallstoffe gleichmäßig einer Verbrennung zugeführt werden können, sodass keine langsam abbrennenden Aggregate von Abfallstoffen eingebracht werden, wobei bei einer effektiven Trocknung und einer ausreichenden Zerkleinerung die Cellulosereste auch in das Klinkerherstellungsverfahren eingeblasen werden können.

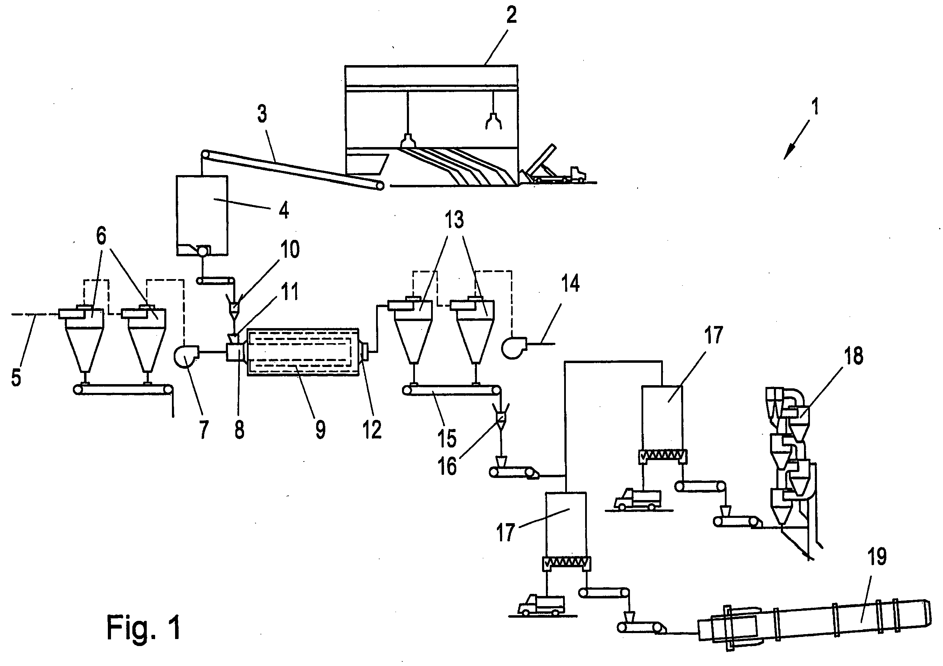

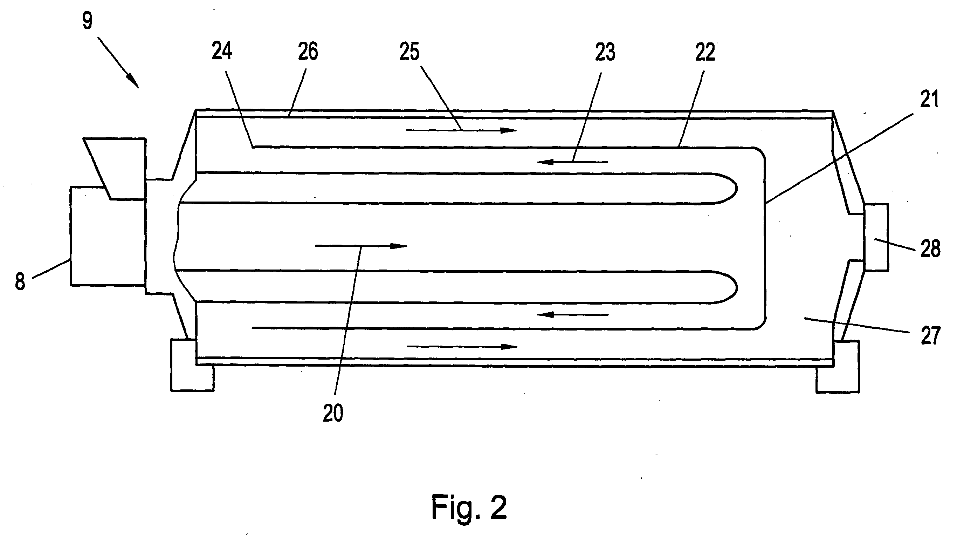

Die Erfindung wird nachfolgend anhand eines in der Zeichnung schematisch dargestellten Ausführungsbeispiels näher erläutert. In dieser zeigen Fig. 1 ein allgemeines Verfahrensschema des erfindungsgemäßen Verfahrens und Fig. 2 eine schematische Darstellung teilweise im Schnitt eines Trocknungsreaktors für den Einsatz bei der Durchführung des erfindungsgemäßen Verfahrens.

In Fig. 1 ist mit 1 eine Anlage zur Durchführung des erfindungsgemäßen Verfahrens bezeichnet. In einer Empfangsanlage 2 zur Entgegennahme der cellulosehältigen Abfallstoffe werden die Abfallstoffe zwischengelagert und über ein Förderband 3 einer Zerkleinerungseinrichtung 4 aufgegeben. Über die strichliert dargestellte Leitung 5 wird heißes Abgas aus dem Klinkerherstellungsverfahren den Zyklonen 6 zur Entfernung von Schwebstoffen aufgegeben und über ein Gebläse 7 in den Abgaseinlass 8 des Trocknungsreaktors 9 gefördert. Die zerkleinerten Abfallstoffe werden über eine Dosierstelle 10 in die Materialaufgabe 11 des Trocknungsreaktors verbracht, wo der Trocknungsschritt durchgeführt wird. Mit 12 ist der Austrag des Trocknungsreaktors 9 bezeichnet, an welchen Zyklone 13 zur Auftrennung des Gemisches aus Gas und getrockneten Abfallstoffen anschließen. Über einen Gasaustrag 14 können die Abgase ggf. nach einer Trocknung in einem Kondensator entstaubt und in die Atmosphäre abgegeben werden oder aber, wie dies bereits beschrieben wurde, in das Klinkerherstellungsverfahren rückgeführt werden. Darüber hinaus ist eine Rückführung in den Trocknungsreaktor 9 zur Einstellung der Temperatur der heißen Abgase vor dem Trocknungsschritt im Rahmen des erfindungsgemäßen Verfahrens denkbar.

Die getrockneten Abfallstoffe werden über eine Transporteinrichtung, in diesem Fall ein Förderband 15 und eine Zerkleinerungs- und Dosierstelle 16 auf verschiedene Bunker 17 aufgeteilt, aus welchem sie beispielsweise dem Kalzinator 18 oder einem Drehrohrofen 19 eines Klinkerherstellungsverfahrens zugeführt werden können.

In Fig. 2 ist der Abgaseinlass 8 und der Trocknungsreaktor 9 zu erkennen, wobei zu erkennen ist, dass das Gemisch aus heißen Abgasen aus dem Klinkerherstellungsverfahren und zu trocknenden cellulosehältigen Abfallstoffen entlang des Pfeils 20 durch ein innen liegendes Rohr erfolgt. An der ersten Umlenkungsstelle 21 tritt das Gemisch in einen Ringraum, der von einem konzentrischen, radial außerhalb des ersten Rohres liegenden weiteren Rohr 22 begrenzt wird, wobei eine Umlenkung des Materialstromes um 180° in Richtung des Pfeils 23 erfolgt. An einer weiteren Umlenkungsstelle 24 erfolgt eine erneute Umlenkung des Materialstromes, sodass der Strom nun in Richtung des Pfeils 25 in einen, durch ein weiteres Rohr 26 begrenzten, radial äußeren Ringraum strömt. Am Auslassende 27 des Trocknungsreaktors 9 erfolgt am Auslass 28 der Auslass des Gemisches aus Abgasen und getrockneten Abfallstoffen, welche, wie im Zusammenhang mit Fig. 1 beschrieben, weiter verarbeitet werden.

## Patentansprüche

1. Verfahren zum Verwerten von organischen Abfallstoffen, insbesondere von cellulosehältigen, feuchten, organischen Abfallstoffen in einem Klinkerherstellungsverfahren, bei welchem die Abfallstoffe als Brennstoff in das Klinkerherstellungsverfahren eingebracht und verbrannt werden, wobei die Abfallstoffe vor dem Einbringen in das Klinkerherstellungsverfahren in einem Trocknungsschritt im Gleichstrom mit den heißen Abgasen des Klinkerherstellungsverfahrens in Kontakt gebracht und getrocknet werden, **dadurch gekennzeichnet, dass** der Trocknungsschritt in einem Trocknungsreaktor durchgeführt wird, in welchem die feuchten Abfallstoffe zusammen mit den heißen Abgasen unter mehrmaligem Umlenken der Strömungsrichtung um 180° durch eine Reihe von konzentrisch angeordneten Rohren geleitet werden, und die Temperatur der heißen Abgase vor dem Trocknungsschritt durch Zumischen von Umgebungsluft und/oder von Luft aus dem Klinkerherstellungsverfahren auf einen Maximalwert von 400°C eingestellt wird.

2. Verfahren nach Anspruch 1, **dadurch gekennzeichnet, dass** als heiße Abgase die Abgase des Klinkerkühlers und/oder des Vorwärmers verwendet werden.

3. Verfahren nach Anspruch 1 oder 2, **dadurch gekennzeichnet, dass** die Abfallstoffe vor dem Trocknungsschritt zerkleinert werden.

4. Verfahren nach einem Anspruch 1, 2 oder 3, **dadurch gekennzeichnet, dass** die Temperatur der heißen Abgase am Ende des Trocknungsschrittes durch Steuerung des Stromes durch den Trocknungsreaktor auf einen Maximalwert von 150°C eingestellt wird.

5. Verfahren nach einem der Ansprüche 1 bis 4, **dadurch gekennzeichnet, dass** das aus dem Trocknungsreaktor austretende Gemisch aus Gas und getrockneten Abfallstoffen aufgetrennt wird.

6. Verfahren nach einem der Ansprüche 1 bis 5, **dadurch gekennzeichnet, dass** zumindest ein Teil der Gase aus dem Trocknungsreaktor einer Entstaubung zugeführt wird.

7. Verfahren nach einem der Ansprüche 1 bis 6, **dadurch gekennzeichnet, dass** zumindest ein Teil der Gase aus dem Trocknungsreaktor dem Klinkerherstellungsverfahren als Verbrennungsluft zugeführt wird.

8. Verfahren nach einem der Ansprüche 1 bis 7, **dadurch gekennzeichnet, dass** zumindest ein Teil der aus dem Trocknungsreaktor austretenden Gase in den Trocknungsreaktor rezirkuliert werden.

9. Verfahren nach einem der Ansprüche 1 bis 8, **dadurch gekennzeichnet, dass** die aus dem Trocknungsreaktor ausgetragenen Gase zur Trocknung einem Kondensator zugeführt werden.

10. Verfahren nach einem der Ansprüche 1 bis 9, **dadurch gekennzeichnet, dass** die getrockneten Abfallstoffe einer Zerkleinerung unterworfen werden.

## Claims

1. A process for utilizing organic waste materials, in particular cellulose-containing, moist, organic waste materials, in a clinker production process in which the waste materials are introduced as fuel and burnt in the clinker production process, wherein the waste materials are brought into contact with the hot exhaust gases of the clinker production process and dried in a drying step flowing in parallel therewith before they are introduced into the clinker production process, **characterised in that** the drying step is carried out in a drying reactor in which the moist waste materials are passed together with the hot exhaust gases through a series of concentrically arranged tubes, with multiple changes in flow direction about 180°, and the temperature of the hot exhaust gases is set to a maximum value of 400 °C by mixing in ambient air and/or air from the clinker production process before the drying process.

2. The process according to claim 1, **characterised in that** the exhaust gases from the clinker cooler and/or the preheater are used as the hot exhaust gases.

3. The process according to claim 1 or 2, **characterised in that** the waste materials are crushed before the drying step.

4. The process according to claim 1, 2 or 3, **characterised in that** the temperature of the hot exhaust gases at the end of the drying step is set to a maximum value of 150 °C by controlling the flow through the drying reactor.

5. The process according to any of claims 1 to 4, **characterised in that** the mixture of gas and dried waste materials is separated when it leaves the drying reactor.

6. The process according to any of claims 1 to 5, **characterised in that** at least a portion of the gases from the drying reactor is forwarded to a dedusting stage.

7. The process according to any of claims 1 to 6, **characterised in that** at least a portion of the gases from the drying reactor is forwarded to the clinker production process as combustion air.

8. The process according to any of claims 1 to 7, **characterised in that** at least a portion of the gases from the drying reactor is recirculated to the drying reactor.

9. The process according to any of claims 1 to 8, **characterised in that** the gases discharged from the drying reactor are forwarded to a condenser for drying.

10. The process according to any of claims 1 to 9, **characterised in that** the dried waste materials undergo crushing.

## Revendications

1. Procédé de valorisation de déchets organiques, notamment de déchets organiques humides contenant de la cellulose, dans un procédé de fabrication de clinker dans lequel les déchets sont introduits dans le procédé de fabrication de clinker et sont brulés, les déchets étant mis en contact, dans une étape de séchage, en flux de même sens, avec les gaz d'échappement chauds du procédé de fabrication de clinker et sont séchés, **caractérisé en ce que** l'étape de séchage est effectuée dans un réacteur de séchage dans lequel les déchets humides sont conduits, ensemble avec les gaz d'échappement chauds, en changeant la direction du flux à plusieurs reprises de 180°, par une série de tuyaux concentriques et **en ce que** la température des gaz d'échappement chauds est ajustée avant l'étape de séchage par ajout et mélange d'air ambiant et/ou d'air du procédé de fabrication de clinker à une valeur maximale de 400 °C.

2. Procédé selon la revendication 1, **caractérisé en ce que** sont utilisés comme gaz d'échappement chauds les gaz d'échappement du refroidisseur de clinker et/ou du préchauffeur.

3. Procédé selon la revendication 1 ou 2, **caractérisé en ce que** les déchets sont broyés avant l'étape de séchage.

4. Procédé selon une revendication 1, 2 ou 3, **caractérisé en ce que** la température des gaz d'échappement chauds est ajustée à la fin de l'étape de séchage, par conduite du flux par le réacteur de séchage à une valeur maximale de 150 °C.

5. Procédé selon l'une des revendications 1 à 4, **caractérisé en ce que** le mélange de gaz et de déchets séchés sortant du réacteur de séchage est séparé.

6. Procédé selon l'une des revendications 1 à 5, **caractérisé en ce qu'**au moins une partie des gaz provenant du réacteur de séchage est amené vers un dépoussiérage.

7. Procédé selon l'une des revendications 1 à 6, **caractérisé en ce qu'**au moins une partie des gaz provenant du réacteur de séchage est amené au procédé de fabrication de clinker comme air de combustion.

8. Procédé selon l'une des revendications 1 à 7, **caractérisé en ce qu'**au moins une partie des gaz sortant du réacteur de séchage est recirculée dans le réacteur de séchage.

9. Procédé selon l'une des revendications 1 à 8, **caractérisé en ce que** les gaz sortis du réacteur de séchage sont amenés, pour séchage, à un condenseur.

10. Procédé selon l'une des revendications 1 à 9, **caractérisé en ce que** les déchets séchés sont soumis à un broyage.
